# EUROPÄISCHE PATENTSCHRIFT

(11) **EP 0 964 172 B1**
(45) Veröffentlichungstag und Bekanntmachung des Hinweises auf die Patenterteilung: **10.03.2004**
(21) Anmeldenummer: 99110821.8
(22) Anmeldetag: 05.06.1999
(51) Int. Cl.: F16C 25/08

(54) **Verfahren zur Veränderung der Einspannverhältnisse eines Drehteils sowie Drehteil**
Method for modifying the preload of a rotary member and rotary member
Méthode pour modifier la précharge d'un membre rotatif et membre rotatif

(30) Priorität: 13.06.1998 DE 19826174
(43) Veröffentlichungstag der Anmeldung: 15.12.1999
(73) Patentinhaber: DaimlerChrysler AG, 70567 Stuttgart (DE)
(72) Erfinder: Schnur, Jürgen, 71254 Ditzingen (DE); Tomaschko, Silvia Dr., 89075 Ulm (DE)

(56) Entgegenhaltungen:
- EP-A- 0 377 145
- US-A- 4 850 719
- US-A- 5 221 146
- PATENT ABSTRACTS OF JAPAN vol. 014, no. 026 (M-921), 18. Januar 1990 (1990-01-18) & JP 01 266320 A (NIPPON SEIKO KK), 24. Oktober 1989 (1989-10-24)
- PATENT ABSTRACTS OF JAPAN vol. 010, no. 320 (M-530), 30. Oktober 1986 (1986-10-30) & JP 61 127922 A (OKUMA MACH WORKS LTD), 16. Juni 1986 (1986-06-16)

## Beschreibung

Die Erfindung betrifft ein Verfahren zur Veränderung der Einspannverhältnisse eines Drehteils, welches drehbar in dem Wellenlager gelagert ist, und bei dem die Rotationsachse des Drehteils achsgleich zur Rotationsachse des Wellenlagers angeordnet wird sowie ein Drehteil, das in einem Wellenlager drehbar gelagert ist und dessen Rotationsachse achsgleich zur Rotations- bzw. Symmetrieachse des Wellenlagers angeordnet ist, und mit einer Verstelleinheit zum Ausgleich eines Spiels des Drehteils gemäß den Oberbegriffen der Ansprüche 1 bzw 5, siehe EP 377 145 A2.

Im Maschinenbau sind Drehteile im allgemeinen unter Zuhilfenahme von Wellen- bzw. Drehlagern wie Kugellager, Kegelrollenlager, Gleitlager usw. drehbar gehaltert. Bei den Drehteil/Wellenlager-Verbindungen können Veränderungen der Einspannverhältnisse, wie bspw. ein Spiel, auftreten. Die Veränderungen sind i.a. nicht statisch, sondern können sich insbesondere durch thermische Effekte verändern. Mit der Veränderung der Einspannverhältnisse des Drehteils in dem Wellenlager sind verschiedene Effekte verbunden. So verändern sich insbesondere die Eigenfrequenzen und/oder die Schwingungsamplituten des Drehteils. Bislang wird ein Ausgleich der auftretenden Veränderungen dadurch erreicht, daß die Drehteil/Wellenlager-Verbindung insbesondere durch eine Feder oder durch eine Materialelastizität vorgespannt wird, wobei die Vorspannung zum Teil auf Lagerschalen wirkt.

Derartige Ausgleichsvorrichtung sind bspw. aus der DE 195 41 245 A1, der DE 38 10 448 C2, dem DE 93 01 334 U1 oder der DE 31 23 590 A1 bekannt.

Desweiteren weisen Maschinen mit rotierenden Teile zumindest meistens eine gewisse störende Geräuschkulisse auf. Ein Grund für diese Störgeräusche liegt u.a. daran, daß die rotierenden Drehteile, insbesondere Wellen, Schwingungen in andere Bauteile einleiten. Zur Übertragung von Schwingungen zwischen Bauteilen bzw. zur Einleitung von Schwingungen von einem Bauteil in ein anderes Bauteil sind Resonanzfrequenzen wichtig. Die mathematische Zusammenhang dieser frequenzabhängigen Übertragung wird Übertragungsfunktion genannt.

Aus der US 5,332,061 A1 ist Verfahren zur Unterdrückung von in die Karosserie eingeleiteten Vibrationen und ein entsprechendes Fahrzeug bekannt. Die betreffenden eingeleiteten Vibrationen stammen vom Motor und hierbei insbesondere von der sich bewegenden Teilen wie der rotierenden Kurbel- oder Nockenwelle. Die Vibrationen werden an den Verbindungspunkten des Motors mit der Karosserie übertragen. Zu Dämpfung dieser Vibrationen weist das Fahrzeug Shaker, also mechanische Schwingungserreger auf, die im Bereich von zumindest einigen Verbindungspunkten des Motors mit der Karosserie angeordnet sind. Beim Betreiben des Motors werden die Shaker in Abhängigkeit von der Motorendrehzahl bei den Resonsanzfrequenzen gegenphasig zu den vom Motor kommenden Vibrationen erregt, wodurch die Übertragung der eingeleiteten Vibrationen zumindest gedämpft werden. Die entsprechenden Frequenzen und deren Amplituten für die gezielt eingeleiteten künstlichen Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, daß die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführende Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu wird je nach Größe des Parameters aus einem Datenfeld bestimmte Daten ausgelesen und unter Zuhilfenahme von Schwingungserregern in u.a. auch körperwahrnehmbaren künstliche Schwingungen umgesetzt. Durch diese Maßnahmen können in Verbindung mit der Beeinflussung des akustisch wahrgenommenen Luftschalls sowohl positive als auch negative Interferenzen der gezielt eingeleiteten künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.

Die Aufgabe der Erfindung ist es, ein Verfahren zu entwickeln, mit dem die wahrnehmbaren Schwingungen einer rotierende Drehteile aufweisenden Maschine und gleichfalls ein ggf. auftretendes axiales Spiel zumindest verringert werden kann. Desweiteren ist es Aufgabe der Erfindung, eine neuartige Vorrichtung vorzuschlagen, mit der ebenfalls wahrnehmbaren Schwingungen und gleichfalls ein ggf. auftretendes axiales Spiel zumindest verringert werden kann.

Die Aufgabe wird erfindungsgemäß mit einem Verfahren gemäß Anspruch 1 und mit einem Wellenlager gemäß Anspruch 5 gelöst.

Durch die gezielte und reversible Änderung der radialen Erstreckung einer insbesondere Piezoelemente aufweisenden Radialverstelleinheit bzw. des auf das Drehteil radial einwirkenden Anpreßdrucks, können die Einspannverhältnisse während des Betriebs durch einen gezielten Eingriff von außen verändert werden.

Die Veränderung der Einspannungsverhältnisse bewirkt bspw., daß die Werte der Eigenschwingungen des Drehteils und auch Übertragungsfunktion vom Drehteil an ein weiteres Bauteil verändert werden. Durch die Veränderung der Übertragungsfunktion ist die Weiterleitung von Schwingungen, also der übertragbaren Energie, die von dem Drehteil kommen, in ein anderes Bauteil verändert, insbesondere zumindest vermindert.

Bei der Radialverstelleinheit erfolgt der Eingriff durch das Anlegen einer elektrischen Spannung. Diese Maßnahme führt zu einer Veränderung der Resonanz- bzw. Eigenfrequenzen des Drehteils und ebenfalls zu einer Veränderung bei der Übertragung bzw. Einleitung von Schwingungen. Zur Übertragung von Schwingungen zwischen Bauteilen bzw. zur Einleitung von Schwingungen von einem Bauteil in ein anderes Bauteil sind die jeweiligen Resonanzfrequenzen wichtig. Der mathematische Zusammenhang dieser frequenzabhängigen Energie- bzw. Schwingungs-Übertragung wird Übertragungsfunktion genannt.

Zusätzlich kann auf die genannte Weise kann bspw. ein Spiel, das sich aufgrund von Temperatureinflüssen verändert, während des Betriebs des Drehteils erfolgen. Sinnvoll ist dies bspw. für einen Spielausgleich.

Dies ist vorzugsweise bei einer Kurbel- und/oder Nockenwelle einer Brennkraftmaschine, vorzugsweise eines Diesel- oder Benzinmotors als Drehteil sinnvoll, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann.

Eine Verwendung dieses Verfahrens bzw. dieser Vorrichtung ist zweckmäßigerweise bei Drehteilen von Elektromotoren wie insbesondere Rotoren aber auch in Flugzeugtriebwerken, bspw. Düsentriebwerken oder Propeller gegeben.

In bevorzugter Weise ist der Einsatz die Erfindung auch bei einer Kurbel- und/oder Nockenwelle einer Brennkraftmaschine, vorzugsweise eines Diesel- oder Benzinmotors als Drehteil zweckmäßig, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann. Vorzugsweise erfolgt hier die Beeinflussung der vom Betreiber eines Fahrzeuges insbesondere als störend wahrnehmbaren und zumindest zum Teil vom Motor kommenden Geräuschpegels am Ort des Entstehens und nicht wie bislang üblich, erst am Ort der Wahrnehmung durch den Betreiber. Hierdurch ist in günstiger Weise u.a. der Aufwand hinsichtlich der Steuerelektronik und des apparativen Aufbaus (Mikrophon, Lautsprecher und dgl.) verringert.

Sinnvolle Ausgestaltungen der Erfindung sind den Unteransprüchen entnehmbar. Im übrigen wird die Erfindung anhand von in den Zeichnungen dargestellten Ausführungsbeispielen näher erläutert. Dabei zeigt
- Fig. 1: ein Wellenlager mit innenseitig angeordneter zweiteiliger Radialverstelleinheit,
- Fig. 2: ein Wellenlager mit innenseitig angeordneter dreiteiliger Radialverstelleinheit,
- Fig. 3: ein Wellenlager mit außenseitig angeordneter einteiliger Radialverstelleinheit,
- Fig. 4: eine Kurbelwelle mit mehreren erfindungsgemäßen Wellenlagern,
- Fig. 5: eine Detailzeichnung eines stirnseitig in einem umgebenden Bauteil 7 gehalterten Drehteils mit stirnseitig angeordneter Axial- und Radialverstelleinheit,
- Fig. 6: eine weitere Detailzeichnung eines stirnseitig in einem umgebenden Bauteil 7 gehalterten Drehteils mit stirnseitig angeordneter Axial- und Radialverstelleinheit
- Fig. 7: eine Axial- bzw. Radialverstelleinheit, die in der Art einer Dichtung mit integrierten Piezoelementen ausgeführt ist,
- Fig. 8: eine Axial- bzw. Radialverstelleinheit, die in der Art einer Dichtung mit integrierten und orientierten Piezoelementen ausgeführt ist und
- Fig. 9: eine Axial- bzw. Radialverstelleinheit und deren Ausschnittsvergrößerung, wobei die Radialverstelleinheit in der Art einer Dichtung mit integrierten und orientierten Piezoelementen sowie mit integrierten Kontakten ausgeführt ist.

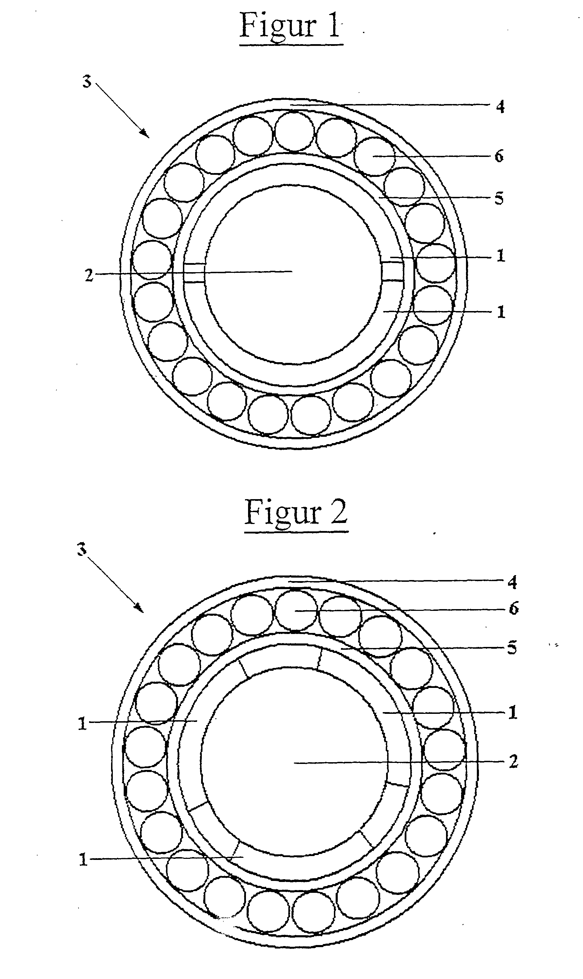

In Figur 1 ist ein Wellenlager 3 in der Art eines Kugelrollenlagers dargestellt, wobei die Erfindung nicht auf Rollenlager beschränkt ist, sondern vielmehr alle möglichen Wellenlager, wie bspw. Rollen-, Wälz- oder Gleitlager und dgl., betrifft. Das Wellenlager nach Figur 1 weist eine Außenschale 4, eine Innenschale 5, eine innenseitig der Innenschale 5 angeordnete Radialverstelleinheit 1 sowie zwischen der Außenschale 4 und der Innenschale 5 rollbar angeordnete Kugeln 6 auf.

Die Radialverstelleinheit 1 wird von zwei als Halbschalen ausgebildete Piezolemente gebildet. Die halbschaligen Piezoelemente der Radialverstelleinheit 1 sind voneinander beabstandet auf der Innenseite der Innenschale 5 angeordnet, so daß sie im Ruhezustand insbesondere spielfrei an der Außenfläche des Drehteils 2 anliegen.

Die halbschaligen Piezoelemente der Radialverstelleinheit 1 werden in günstiger Weise dadurch elektrisch kontaktiert, daß an die Welle auf Masse und die Innenschale 5 des Wellenlagers 3 das entgegengesetzte, vorzugsweise positive Potential angelegt wird. Vorzugsweise wird an das gesamte Wellenlager 3 das positive Potential angelegt, wobei das Wellenlager 3 gegenüber seinem aufnehmenden Bauteil 7 und seiner sonstigem Umgebung elektrisch isoliert sein sollte.

Durch die elektrische Kontaktierung des Wellenlagers 3 können die halbschaligen Piezoelemente der Radialverstelleinheit 1 durch Anlegen einer elektrischen Gleichspannung radial gestreckt werden, wodurch sich der Anpreßdruck an die Welle und damit die zuvor vorliegenden Einspannverhältnisse ändern.

Mit der Änderung der Einspannverhältnisse ist u.a. eine Verstimmung der Eigenschwingungen des Drehteils 2 verbunden. Durch die Veränderung der Geometrie der halbschaligen Piezoelemente der Radialverstelleinheit 1 kann bspw. auch ein ggf. auftretendes Spiel ausgeglichen werden.

Desweiteren können die halbschaligen Piezoelemente der Radialverstelleinheit 1 bei einer im Drehteil 2 auftretenden Schwingung durch das Anlegen einer Wechselspannung zu einer Sekundär-Schwingung erregt werden. Die Sekundär-Schwingung kann mit der auftretenden Schwingung, insbesondere einer Eigenschwingung des Drehteils 2 interferiert werden, wodurch die auftretende Schwingung verändert und insbesondere gedämpft wird.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit eentsprechend generierten Datensätzen die halbschaligen Piezoelemente der Radialverstelleinheit 1 zu einer entsprechenden Sekundär-Schwingung zu erregen.

Auf eine aufwendige Aufnahme- und/oder Auswerteelektronik für die auftretenden Schwingung kann in besonderer Weise verzichtet werden, wenn die Datensätze zur Steuerung der Einspannverhältnisse und/oder der Sekundär-Schwingung einem vorzugsweise elektronischen Datenspeicher, in dem zuvor entsprechend exemplarisch ermittelte Datensätze niedergelegt sind, entnommen werden. Insbesondere erfolgt die Entnahme eines jeweiligen Datensatzes in Abhängigkeit eines mit dem Betrieb des Drehteils 2 korrelierten Parameters.

In andere Fällen ist es zweckmäßig, die auftretenden Schwingungen zu ermitteln und die Datensätze für die Sekundär-Schwingung entsprechend der ermittelten Schwingung auszuwählen.

Handelt es sich bei dem Drehteil 2 um ein rotierendes Drehteil, insbesondere um eine Nocken- und/oder Kurbelwelle eines Verbrennungsmotors, ist es sinnvoll, die Einspannverhältnisse und/oder die Sekundär-Schwingungen in Abhängigkeit insbesondere der Drehzahl und/oder des Kurbel- bzw. Nockenwellenwinkels des Verbrennungsmotors zu verändern.

In sinnvoller Weise kann die radiale Verstellung der Radialverstelleinheit 1 und die künstliche Generierung der Sekundär-Schwingung miteinander verbunden werden, wodurch die Vorrichtung bzw. das erfingsgemäße Verfahren flexibler wird.

Die Kombination dieser beiden Verwendungsmöglichkeiten eines erfindungsgemäßen Wellenlagers 3 kann dadurch erfolgen, daß als elektrische Spannung eine Wechselspannung mit einer zusätzlichen Gleichspannung( einer sogenannten Offset-Spannung) verwendet wird.

Die Offset-Spannung regelt die radiale Erstreckung bzw. den radialen Anpreßdruck der halbschaligen Piezoelemente der Radialverstelleinheit 1, während die Wechselspannung die Piezoelemente der Radialverstelleinheit 1 zu der Sekundär-Schwingung erregt. Dadurch führen die halbschaligen Piezoelemente der Radialverstelleinheit 1 eine Sekundär-Schwingung aus, deren Nullpunkt am demjenigen Ort angeordnet ist, der durch die Offset-Spannung festgelegt ist.

Im Falle eines innen- und außenseitig fest eingespannten Wellenlagers 3 kann sich ein Piezoelement der Radialverstelleinheit 1 allenfalls nur gering körperlich ausdehnen, so daß es sich in diesem Fall bei den Sekundär-Schwingungen um Druck-Schwingungen, also um radiale Kraftflüsse handelt, die auf das Drehteil 2 übertragen werden. Hierdurch werden ebenfalls die Einspannverhältnisse des Drehteils 2 verändert.

Des weiteren können die Einspannverhältnisse und/oder die Sekundär-Schwingungen in besonderer Weise auch in Abhängigkeit von der Temperatur des Drehteils 2 und/oder des Wellenlagers 3 verändert werden.

In Figur 2 ist ein weiteres Wellenlager 3 dargestellt, das demjenigen nach Figur 1 ähnlich ist. Der Unterschied zwischen diesen beiden Wellenlagern besteht darin, daß hier die Radialverstelleinheit 1 hier drei kreisschalenförmige Piezoelemente aufweist.

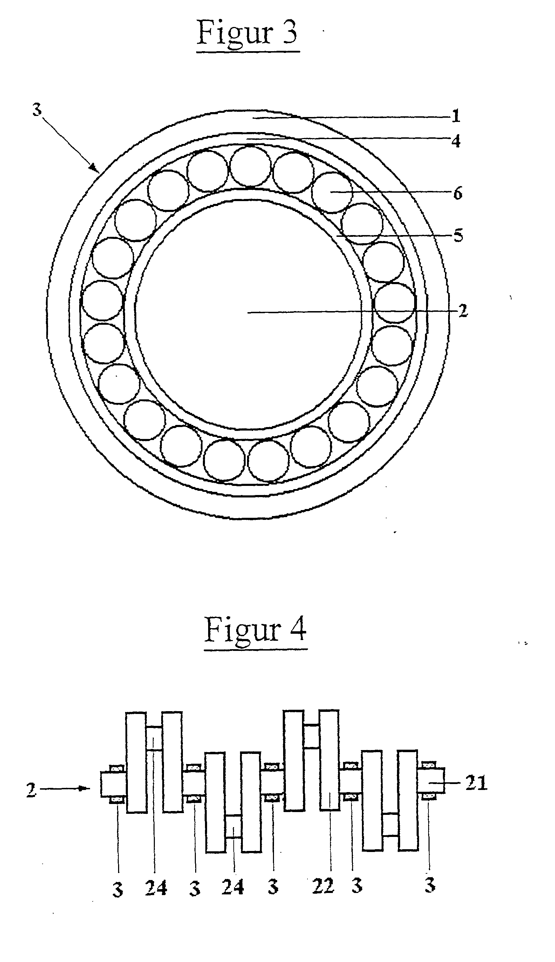

In Figur 3 ist ein weiteres Wellenlager 3 dargestellt. Bei diesem Wellenlager 3 ist die Radialverstelleinheit 1 an der Außenfläche der Außenschale 4 angeordnet und weist ein ringförmiges Piezoelement auf, das ggf. auch eine axial verlaufenden Fuge (nicht eingezeichnet) aufweisen kann.

Das Wellenlager 3 wird an dem Drehteil 2 derart angeordnet, daß seine Symmetrieachse gleichachsig zu der Rotationsachse des Drehteils 2 verläuft. Des weiteren wird das Wellenlager 3 an seinen beiden Außenflächen abgestützt; d.h. die Innenseite der Innenschale 5 liegt an der Außenfläche des Drehteils 2 und die Ringaußenseite der Piezoelemente der Radialverstelleinheit 1 an einem es zumindest bereichsweise umgebenden Bauteil 7 an.

Für die elektrischen Kontaktierung wird die der Außenfläche der Außenschale 4 zugewandte Ringinnenseite des Piezoelements der Radialverstelleinheit 1 auf Masse und die Ringaußenseite des Piezoelements der Radialverstelleinheit 1 an das positive Potential gelegt.

Tritt ein radiales Spiel zwischen dem das Wellenlager 3 umgebenden Bauteil 7 und/oder zwischen dem Wellenlager 3 und dem Drehteil 2 auf, wird eine elektrische Spannung an das Piezoelement der Radialverstelleinheit 1 angelegt. Durch die elektrische (Gleich-) Spannung verändert sich die radiale Erstreckung des Piezoelements der Radialverstelleinheit 1. Dadurch wird das Spiel zumindest verringert. Sinnvollerweise wird die elektrische Spannung so gewählt, daß die Veränderung der radialen Erstreckung dem Maß des Spiel entspricht.

Ist das Wellenlager 3 an seinen beiden achsparallelen Außenflächen spielfrei angelegt, kann sich die radiale Erstreckung des Piezoelements der Radialverstelleinheit 1 allenfalls minimal ändern. In diesem Fall wird der Druck auf das Drehteil 2 und das das Wellenlager 3 umgebende Bauteil 7 erhöht sowie die Einspannverhältnisse geändert.

Weist die elektrische Spannung einen Wechselspannungsanteil auf, so können hierdurch - wie schon zuvor beschrieben - Sekundär-Schwingungen in Form von mit großen Kräften verbundene Druck-Schwingungen auf das Drehteil 2 und auf das das Wellenlager 3 umgebende Bauteil 7 übertragen werden.

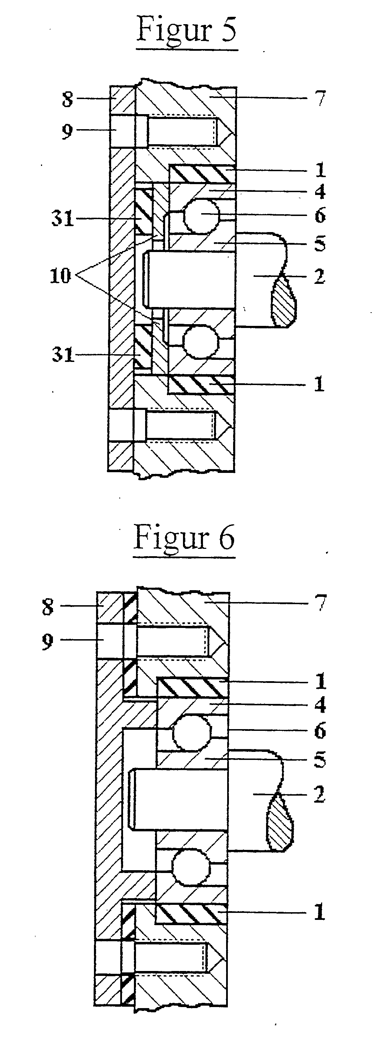

In Figur 4 ist als Drehteil 2 eine Kurbelwelle mit daran angeordneten Wellenlagern dargestellt. Die Kurbelwelle weist zwei axial außenseitig angeordnete Hauptlagerzapfen 21 auf. Einem Hauptlagerzapfen 21 folgen in Richtung der Rotationsachse zwei Kurbelwangen 22, zwischen denen ein Lagerzapfen 23 angeordnet ist. Der zweiten Kurbelwange 22 nachfolgend ist ein Pleullagerzapfen 24 angeordnet, der radial zu Rotationsachse der Kurbelwelle versetzt ist. Anschließend folgt wieder eine Kurbelwange 22, ein Lagerzapfen 23, eine Kurbelwange 22, ein Pleullagerzapfen 23 usw.. Die erfindungsgemäßen Wellenlager 3 sind an den Hauptlagerzapfen 21 und an den Lagerzapfen 23 angeordnet. In bevorzugter Weise sind die Wellenlager 3 getrennt voneinander ansteuerbar, wodurch die Variationsmöglichkeiten einer durch die Wellenlager erfolgenden Einflußnahme auf das Drehteil erhöht sind.

Anstelle von Rollenlagern ist es bspw. bei einer Kurbelwelle sinnvoll zumindest an den Lagerzapfen sogenannte Gleitlager zu verwenden. In diesem Fall können hier die Piezoelemente gleich die Gleitlager bilden. Im zweckmäßiger Ausgestaltung können diese als Gleitlager und gleichzeitig als Radialverstelleinheit 1 verwendeten Piezoeleente auf ihrer der Welle zugekehrten Oberfläche eine Gleitschicht aufweisen. Die Gleitschicht wiederum wiest sinnvoillerweise ein Trockenschmiermittel, bevorzugt Molydänsulfid (MoS₂) und besonders bevorzugt Borsäure (H₃BO₃), auf.

In Figur 5 ist eine stirnseitige Aufnahme eines Drehteils 2 in einem umgebenden Bauteil 7 dargestellt. Das Drehteil 2 weist einen Anschlag auf, an dem sich der Radius sprungartig ändert. Der Anschlag des Drehteils liegt direkt an dem Innenring 5 des Wellenlagers an und ist dadurch in Axialrichtung spielfrei im Wellenlager angeordnet. Das Wellenlager weist eine Außenschale 4, eine Innenschale 5, eine sowie zwischen der Außenschale 4 und der Innenschale 5 rollbar angeordnete Kugeln 6 auf.

Hinsichtlich der Funktion der Radialverstelleinheit 1 entspricht das hier vorliegende Wellenlager demjenigen nach Figur 3 ist, weshalb auch auf die Funktionsweise dieses Wellenlagers nicht mehr näher eingegangen wird.

Die Innenschale 5 und die Außenschale 4 weisen jeweils nur eine quer zu ihrer Rotationsachse liegende Anlage- bzw. Gleitfläche für die Kugeln 6 auf. Durch diese Konstruktion ist die Innenschale 5 relativ zu der Außenschale 6 in gewissem Maße axial verschiebbar.

In Richtung der Stirnseite des Drehteils 2 liegt an der Außenschale 6 des Wellenlagers ein Konterring 10 an. Auf der anderen Seite des Konterrings 10 liegt an dem Konterring ein ringförmiges Piezoelement an, das die Axialverstelleinheit 31 bildet. Auf der anderen Seite des Piezoelements wiederum liegt an dem Piezoelement eine Abdeckplatte 8 an. Die Abdeckplatte 8 ist durch Schrauben 9 mit dem das Wellenlager aufnehmenden und es umgebenden Bauteil 7 verbunden. Durch diese Konstruktion ist die Axialverstelleinheit 31 auf ihrer einen Seite gegen das umgebende Bauteil 7 und auf ihrer andern Seite gegen die Außenschale 4 des Wellenlagers abgestützt.

Das Material der Piezoelemente der Axialverstelleinheit 1 ist in diesem Fall so gewählt, daß sich die axiale Erstreckung der Piezoelemente bei Anlegen einer elektrischen Spannung vergrößert. Bei einer Vergrößerung der Axialerstreckung der Piezoelmente wird der Konterring 10 stärker in Richtung der Außenschale 4 gedrückt und eine entsprechende Kraft übertragen. Von der Außenschale 4 wird die Kraft über die Kugeln 6 auf die Innenschale 5 und hiervon auf den Anschlag des Drehteils 2 übertragen. Durch diesen in Axialrichtung wirkenden Kraftfluß ist das axiale Einspannverhältnis des Drehteils 2 verändert und die Resonanzfrequenz des Drehteils 2 verstimmt, so daß die Übertragungsfunktion gezielt vorzugsweise geräuschminimierend verändert wird.

Bei einem vorliegenden Axialspiel wird in dem eben geschilderten Fall die gesamte Anordnung über den Konterring in Richtung des Anschlags des Drehteils 2 geschoben und das Axialspiel zumindest verringert. Durch die Veränderung der Geometrie der Piezoelemente der Axialverstelleinheit 1 kann daher auch ein ggf. auftretendes Axialspiel ausgeglichen werden.

Desweiteren können die Piezoelemente der Axialverstelleinheit 1 bei einer im Drehteil 2 auftretenden Schwingung durch das Anlegen einer Wechselspannung zu einer Sekundär-Schwingung erregt werden. Die Sekundär-Schwingung wird über die den Kraftfluß leitenden Komponenten auf das Drehteil 2 übertragen und mit der auftretenden Schwingung des Drehteils, insbesondere einer Eigenschwingung des Drehteils 2, interferiert. Durch die Interferenz mit der Sekundär-Schwingung wird die am Drehteil auftretende Schwingung verändert und insbesondere gedämpft.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit entsprechend generierten Datensätzen die halbschaligen Piezoelemente der Axialverstelleinheit 1 zu einer entsprechenden Sekundär-Schwingung zu erregen.

In Figur 6 ist ein weiteres Ausführungsbeispiel einer stirnseitigen Aufnahme eines Drehteils 2 in einem umgebenden Bauteil 7 dargestellt. Das hier vorliegende Wellenlager entspricht demjenigen nach Figur 5. Das Drehteil 2 weist einen Anschlag auf, an dem sich der Radius sprungartig ändert. Der Anschlag des Drehteils liegt direkt an dem Innenring 5 des Wellenlagers an und ist dadurch in Axialrichtung spielfrei im Wellenlager angeordnet.

Im Unterschied zu dem vorherigen Beispiel ist hier jedoch der ehemalige Konterring und die Abdeckplatte 8 zu einem einzigen Bauteil zusammengefaßt, wobei die Funktion der ehemaligen Konterrings nun von einer Art Dom übernommen, der von der Abdeckplatte 8 in Richtung des Wellenlagers abragt und mit seiner Stirnseite an der Außenschale 4 des Wellenlagers anliegt. Die Axialverstelleinheit 31 ist durch Piezoelemente gebildet, die im Bereich der Schrauben 9 in der Art einer Unterlegscheibe zwischen der Abdeckplatte 8 und dem umgebenden Bauteil 7 angeordnet sind.

Das Material der Piezoelemente die Axialverstelleinheit 1 ist in diesem Fall so gewählt, daß sich die axiale Erstreckung der Piezoelemente bei Anlegen einer elektrischen Spannung verringert, wodurch die mit Vorspannung angezogenen Schrauben 9 die Abdeckplatte 8 stärker in Richtung des Drehteils drücken. Diese Kraft wird über den Dom auf die Außenschale 4 übertragen. Von der Außenschale 4 wird die Kraft über die Kugeln 6 auf die Innenschale 5 und hiervon auf den Anschlag des Drehteils übertragen. Durch diesen in Axialrichtung wirkenden Kraftfluß ist das axiale Einspannverhältnis des Drehteils verändert und die Resonanzfrequenz des Drehteils verstimmt, so daß auch hier die Übertragungsfunktion gezielt geräuschminimierend verändert wird.

Bei einem vorliegenden Axialspiel wird in dem eben geschilderten Fall die gesamte Anordnung über den Dom in Richtung des Anschlags des Drehteils geschoben und das Axialspiel zumindest verringert. Durch die Veränderung der Geometrie der Piezoelemente der Axialverstelleinheit 1 kann daher auch ein ggf. auftretendes Axialspiel ausgeglichen werden.

Anstelle der in den Figuren 1 bis 3 dargestellten Radialverstelleinheiten 1, die immer vollständig aus Piezoelementen gebildet sind, kann in besondere Weise auch als Dichtung ausgeführt sein, in der die Piezoelemente 14, 14', 14'' in einer Kunststoff-Matrix 6 angeordnet sind. Entsprechende Ausführungsbeispiele dieser (aktiven) Dichtungen sind in den Figuren 6 bis 8 dargestellt. Bei diesen Dichtungen ist von Vorteil, daß derartige Axial- und Radialverstelleinheiten 1 neben der Dichtwirkung auch eine Schutzwirkung auf die Piezoelemente 14, 14', 14'' ausüben, die auf die sie umgebende Kunststoff-Matrix 16 der Dichtung zurückzuführen ist.

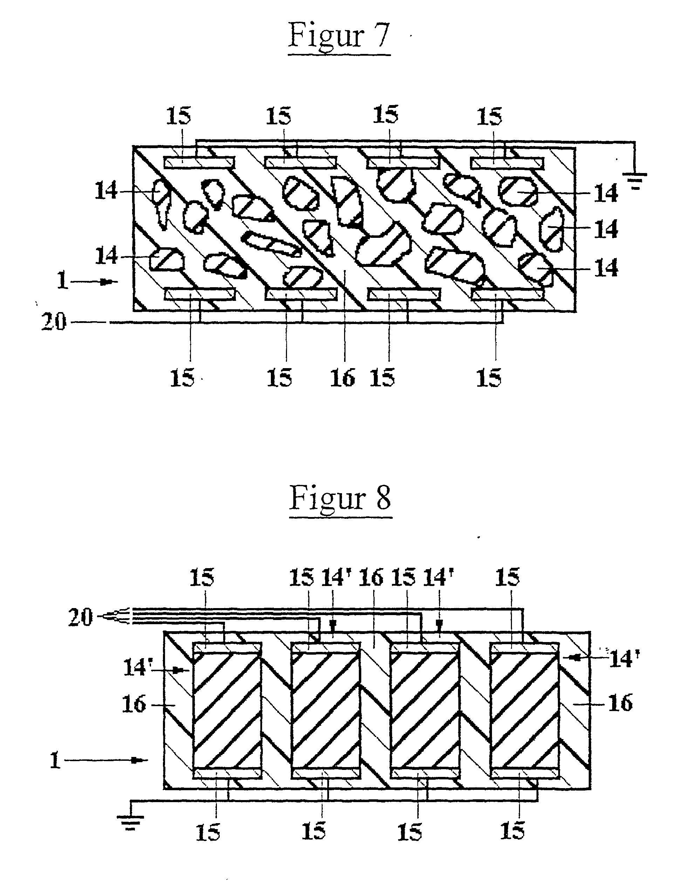

Figur 7 zeigt eine Dichtung einer Axial- bzw. Radialverstelleinheit 1 mit einer Matrix 16 aus vorzugsweise elektrisch leitendem Kunststoff, in den mehrere Piezoelemente 14 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandung der Dichtung sind günstigerweise elektrische Kontakte 15 angeordnet, die durch elektrische Steuerleitungen 20 mit einer Steuereinheit (nicht dargestellt) verbunden sind.

Durch die elektrischen Kontakte 15 können die einzelnen Piezoelemente 14 zum einen gezielt angesteuert werden und zum anderen ist es möglich, eine elektrische Spannung abzugreifen, die z.B. dadurch entstehen kann, das von einem Drehteil 2 übertragenen Schwingungen einen Drucks auf die Piezoelemente 14 ausüben und diese deformieren.

In einem einfachen Fall kann bei einer Dichtung auch auf die elektrischen Kontakte 15 verzichtet werden. In diesem Fall führt eine auf übertragene Schwingungen zurückgehende Deformation der Piezoelemente 14 zwar auch zu einer elektrischen Spannung. Die elektrische Spannung wird hier dann aber in eine Erwärmung der Kunststoff-Matrix 16 der Dichtung umgesetzt, womit das System ebenfalls gedämpft ist.

In Figur 8 ist eine weitere aktive Dichtung einer Axial- bzw. Radialverstelleinheit 1 mit einer Kunststoff-Matrix 16 dargestellt, in der mehrere Piezoelemente 14' eingebettet sind. Im Gegensatz zu dem Ausführungsbeispiel nach Figur 7 sind diese Piezoelemente 14' von bestimmter Größe und Form und zusätzlich orientiert angeordnet. Eine derartige Anordnung wird i.a. als 1-3-Piezokeramik-Polymer-Komposit bezeichnet.

Die einzelnen Piezoelemente 4' können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sein.

Gegenüber der massiven Bauweise von Piezoelementen verringert sich bei den Multi-layer-Systemen bei gleicher Beanspruchung und gleicher aktiver Fläche - die Spannung, während sich die Strom erhöht.

Im Bereich der Wandung der Dichtung sind ebenfalls elektrische Kontakte 15 angeordnet, die gleichfalls durch elektrische Steuerleitungen 20 mit einer Steuereinheit (nicht dargestellt) verbunden sind. Im Unterschied zu der Dichtung nach Figur 6 ist bei der Dichtung nach Figur 7 ein jedes Piezoelement 14' einzeln elektrisch kontaktiert und somit auch getrennt einzeln ansteuerbar.

Über die elektrischen Kontakte 15 können die einzelnen Piezoelemente 14' gezielt zu Sekundär-Schwingungen mit gewünschten Frequenzen und Amplituden erregt werden. Die Sekundär-Schwingungen können mit den von dem Drehteil 2 her übertragenen Schwingungen interferiert und/oder diesen überlagert werden. Im Falle einer negativen Interferenz können die zuvor ohne diese Beeinflussung wahrgenommenen Geräusche zumindest verringert werden.

Die Piezoelemente 14' der Dichtung einer Axial- bzw. Radialverstelleinheit 1 sind vorzugsweise in der Art von Piezostaks ausgebildet und/oder lamellenartig und insbesondere fluchtend hintereinander in der Dichtung angeordnet.

Bei der Herstellung der Dichtung werden die so angeordneten Piezoelemente 14' sinnvollerweise vor dem Einlassen in den die Matrix 16 der Dichtung bildenden Kunststoff noch elektrisch kontaktiert. Damit die Dichtung einer Radialverstelleinheit 1 auch weiterhin ihren üblichen Zweck erfüllt, ist der die Matrix 16 bildende Kunststoff bevorzugt aus einem Polymer und insbesondere aus einem Elastomer gefertigt.

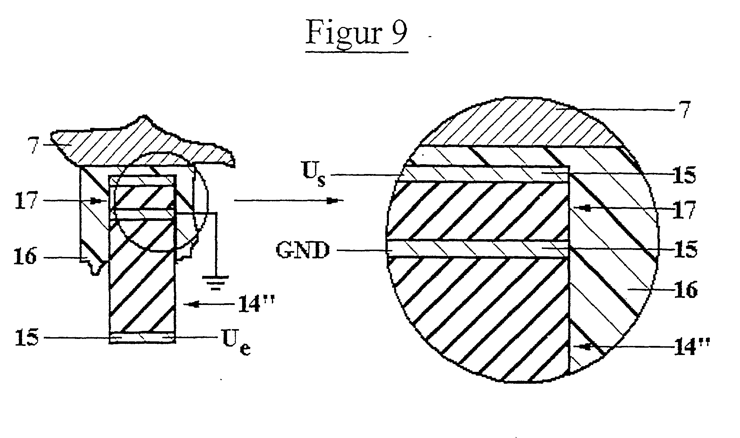

In Figur 9 ist eine aktive Dichtung einer Axial- bzw. Radialverstelleinheit 1 mit einer Kunststoff-Matrix 16 dargestellt, in der mehrere Piezoelemente 14'' mit zugeordneten piezoelektrischen Sensoren 17 eingebettet sind. Die Piezoelemente 14'' gleichen hinsichtlich der Bauart und der orientierten Anordnung weitgehend denen nach Figur 8.

Allerdings ist ihnen in Richtung ihrer aktiven Achse ein vorzugsweise piezoelektrischer Sensor 17 nachgeordnet. Der Sensor 17 weist einen gemeinsamen und einen zusätzlichen elektrischen Kontakt 15 auf. Der gemeinsame Kontakt 15, der zwischen dem Piezoelement 14'' und dem Sensor 17 angeordnet ist, ist zweckmäßigerweise geerdet bzw. auf ein elektrisches Null-Potential gelegt.

Über die elektrischen Kontakte 15 können die einzelnen Piezoelemente 14'' gezielt zu Sekundär-Schwingungen mit gewünschten Frequenzen und Amplituden erregt werden. Die Sekundär-Schwingungen können mit den von dem Drehteil 2 übertragenen Schwingungen interferiert und/oder diesen überlagert werden.

In vorteilhafter Weise kann bei einer derartigen Dichtung einer Axial- bzw. Radialverstelleinheit 1 mit dem Sensor 17 eine nach gewünschter Anregung der Piezoelemente 14'' verbleibende Restschwingung ermittelt und entsprechend gesteuert werden. Mit der zugehörigen Elektronik bildet also dieses Piezo-/Sensorelement 4'' einen Regelkreis aus. Aus diesem Grund ist es u.a. günstig, den Sensor 17 in Kraftflußrichtung und/oder parallel zu der Auslenkungsrichtung der zu erwartenden Amplitude bzw. der Moden der übertragenen Schwingung nach dem erregbaren Piezoelement 14'' anzuordnen.

Durch die einzelne elektrische Kontaktierung eines jeden Sensors 17 und der jeweiligen Piezoelemente 14'' kann der Ermittlung der Restschwingung und die Einleitung der Sekundär-Schwingung mit einer guten Auflösung und Flexibilität erfolgen.

## Patentansprüche

1. Verfahren zur Veränderung der Einspannverhältnisse eines Drehteils, welches drehbar in dem Wellenlager gelagert ist, und bei dem die Rotationsachse des Drehteils achsgleich zur Rotationsachse des Wellenlagers angeordnet wird,
**dadurch gekennzeichnet,**
**daß** die axialen und radialen Einspannverhältnisse zwischen dem Wellenlager (3) und einem drehbar in dem Wellenlager (3) gehaltenen Drehteils (2), insbesondere einer Welle, der Maschine verändert werden mittels einer Axialverstelleinheit (31) und einer Radialverstelleinheit (1) oder einer kombinierten Axial- und Radialverstelleinheit (14, 14', 14")
wobei die Einspannverhältnisse zwischen dem Drehteil (2) und dem Wellenlager (3) gesteuert verändert werden,
wobei die Einspannverhältnisse zwischen dem Drehteil (2) und dem Wellenlager (3) in Abhängigkeit von Schwingungen, die am Drehteil (2) auftreten, verändert werden und
wobei durch die Veränderung der Einspannverhältnisse die zwischen Drehteil (2) und dem Wellenlager (3) bzw. einem das Wellenlager berührenden Bauteils (7) vorliegende Übertragungsfunktion der Schwingungen, insbesondere der Schallwellen erzeugenden Schwingungen, verändert wird.

2. Verfahren nach Anspruch 1,
**dadurch gekennzeichnet,**
**daß** zur Veränderung der Einspannverhältnisse die radiale Erstreckung einer ein piezoelektrisch aktives Material aufweisenden Radialverstelleinheit (1) und einer einer ein piezoelektrisch aktives Material aufweisenden Axialverstelleinheit (31) reversibel verändert wird.

3. Verfahren nach Anspruch 1,
**dadurch gekennzeichnet,**
**daß** die Einspannverhältnisse in Abhängigkeit eines Parameters der Maschine, insbesondere der Drehzahl und/oder dem Kurbelwellenwinkel eines Verbrennungsmotors verändert wird.

4. Verfahren nach Anspruch 1,
**dadurch gekennzeichnet,**
**daß** die Daten zur Steuerung der Einspannverhältnisse einem in einem Datenspeicher niedergelegten Datensatz entnommen werden

5. Drehteil, das in einem Wellenlager drehbar gelagert ist und dessen Rotationsachse achsgleich zur Rotations- bzw. Symmetrieachse des Wellenlagers angeordnet ist, und mit einer Verstelleinheit zum Ausgleich eines Spiels des Drehteils,
**dadurch gekennzeichnet,**
**daß** die Verstelleinheit eine Radialverstelleinheit (1) und eine Axialverstelleinheit (31) aufweist, daß die Radialverstelleinheit (1) ein piezoelektrisch aktives Material aufweist, daß durch die Radialverstelleinheit (1) die effektive radiale Erstreckung im Bereich des zu haltenden Drehteils (2) und/oder der radiale Anpreßdruck an das Drehteil (2) zumindest zwischen zwei Maßen steuerbar reversibel veränderbar ist daß die Axialverstelleinheit (31) ein piezoelektrisch aktives Material aufweist, und daß durch die Axialverstelleinheit (31) die effektive axiale Erstreckung im Bereich des zu haltenden Drehteils (2) und/oder der axiale Anpreßdruck an das Drehteil (2) zumindest zwischen zwei Maßen steuerbar reversibel veränderbar ist.

6. Drehteil nach Anspruch 5,
**dadurch gekennzeichnet,**
**daß** die Radialverstelleinheit (1) direkt an dem Außenumfang des Drehteils (2) angeordnet ist.

7. Drehteil nach Anspruch 5,
**dadurch gekennzeichnet,**
**daß** die Radialverstelleinheit (1) an dem Außenumfang des Wellenlagers (3) angeordnet ist.

8. Drehteil nach Anspruch 5,
**dadurch gekennzeichnet,**
**daß** die Radialverstelleinheit (1) als geteilte Schale ausgebildet ist.

9. Drehteil nach Anspruch 5,
**dadurch gekennzeichnet,**
**daß** das Drehteil (2) ein rotierendes Systemteil, vorzugsweise eine Kurbelwelle oder eine Nockenwelle einer Brennkraftmaschine, insbesondere eines Diesel- oder Benzinmotors ist.

10. Drehteil nach Anspruch 5,
**dadurch gekennzeichnet,**
**daß** das Drehteil (2) ein rotierendes Systemelement, vorzugsweise eine Welle bzw. ein Rotator eines Elektromotors ist.

11. Drehteil nach Anspruch 5,
**dadurch gekennzeichnet,**
**daß** das Drehteil (2) ein rotierendes Systemelement eines Propellers oder einer Düsenantriebs ist.

## Claims

1. Method for varying the grip acting on a rotating component mounted to rotate in a shaft bearing, with the rotation axis of the rotating component arranged to coincide with the rotation axis of the shaft bearing,
**characterised in that**
the axial and radial grip between the shaft bearing (3) and a rotating component (2) which is held and able to rotate in the shaft bearing (3), in particular a shaft of the machine, is varied by means of an axial adjustment unit (31) and a radial adjustment unit (1) or a combined axial and radial adjustment unit (14, 14', 14"),
such that the grip between the rotating component (2) and the shaft bearing (3) is varied in a controlled manner, and
such that the grip between the rotating component (2) and the shaft bearing (3) is varied as a function of vibrations occurring in the rotating component, and
such that by varying the grip, the transfer function of the vibrations, especially those of vibrations which generate noise, between the rotating component (2) and the shaft bearing (3) or a component (7) in contact with the shaft bearing, is varied.

2. Method according to Claim 1,
**characterised in that**
to vary the grip, the radial extension of a radial adjustment unit (1) comprising a piezoelectrically active material and that of an axial adjustment unit (31) comprising a piezoelectrically active material are varied reversibly.

3. Method according to Claim 1,
**characterised in that**
the grip is varied as a function of a parameter of the machine, in particular the speed and/or crankshaft angle of a combustion engine.

4. Method according to Claim 1,
**characterised in that**
the data for controlling the grip are taken from a data array stored in a data memory.

5. Rotating component mounted to rotate in a shaft bearing, with the rotation axis of the rotating component arranged to coincide with the rotation axis or axis of symmetry of the shaft bearing, with an adjustment unit to take up the play of the rotating component,
**characterised in that**
the adjustment unit comprises a radial adjustment unit (1) and an axial adjustment unit (31), such that the radial adjustment unit (1) comprises a piezoelectrically active material and by means of the radial adjustment unit (1) the effective radial extension in the area of the rotating component (2) to be held and/or the radial contact pressure on the rotating component (2) can be varied at least between two amounts in a reversible and controllable manner, and the axial adjustment unit (31) comprises a piezoelectrically active material and by means of the axial adjustment unit (31) the effective axial extension in the area of the rotating component (2) to be held and/or the axial contact pressure on the rotating component (2) can be varied at least between two amounts in a reversible and controllable manner.

6. Rotating component according to Claim 5,
**characterised in that**
the radial adjustment unit (1) is arranged directly at the outer circumference of the rotating component (2).

7. Rotating component according to Claim 5,
**characterised in that**
the radial adjustment unit (1) is arranged at the outer circumference of the shaft bearing (3).

8. Rotating component according to Claim 5,
**characterised in that**
the radial adjustment unit (1) is formed as a divided shell.

9. Rotating component according to Claim 5,
**characterised in that**
the rotating component (2) is a rotating system component, preferably a crankshaft or camshaft of an internal combustion engine, in particular a diesel or petrol engine.

10. Rotating component according to Claim 5,
**characterised in that**
the rotating component (2) is a rotating system element, preferably a shaft or rotor of an electric motor.

11. Rotating component according to Claim 5,
**characterised in that**
the rotating component (2) is a rotating system element of a propeller or jet propulsion system.

## Revendications

1. Procédé pour modifier la précharge d'un membre rotatif, lequel est logé de façon rotative dans le palier d'arbre, et dans lequel l'axe de rotation du membre rotatif est disposé dans le même axe par rapport à l'axe de rotation du palier d'arbre, **caractérisé en ce que**,
■ la précharge axiale et radiale entre le palier d'arbre (3) et un membre rotatif (2), en particulier un arbre, de la machine, maintenu de façon rotative dans le palier d'arbre (3), est modifiée au moyen d'une unité de réglage axial (31) et d'une unité de réglage radial (1) ou d'une unité combinée de réglage axial et radial (14, 14', 14''),
■ la précharge entre le membre rotatif (2) et le palier d'arbre (3) étant modifiée de manière commandée,
■ la précharge entre le membre rotatif (2) eL le palier d'arbre (3) étant modifiée en fonction des vibrations apparaissant sur le membre rotatif (2),
■ en modifiant la précharge, la fonction de transfert des vibrations, en particulier des vibrations produisant des ondes sonores, présente entre le membre rotatif (2) et le palier d'arbre (3) ou un des composants (7) en contact avec le palier d'arbre, est modifiée.

2. Procédé selon la revendication 1, **caractérisé en ce que** pour modifier la précharge, l'extension radiale d'une unité de réglage radial (1) comprenant un matériau piézoélectriquement actif et d'une unité de réglage axial (31) comprenant un matériau piézoélectriquement actif peut être modifiée de façon réversible.

3. Procédé selon la revendication 1, **caractérisé en ce que** la précharge est modifiée en fonction d'un paramètre de la machine, en particulier du régime et/ou de l'angle du vilebrequin d'un moteur à combustion interne.

4. Procédé selon la revendication 1, **caractérisé en ce que** les données permettant de commander la précharge sont prélevées d'un enregistrement placé dans une mémoire d'informations.

5. Membre rotatif, qui est logé de façon rotative dans un palier d'arbre et dont l'axe de rotation est disposé dans le même axe par rapport à l'axe de rotation ou de symétrie du palier d'arbre, et comprenant une unité de réglage permettant de compenser un jeu du membre rotatif, **caractérisé en ce que** l'unité de réglage comprend une unité de réglage radial (1) et une unité de réglage axial (31), **en ce que** l'unité de réglage radial (1) comprend un matériau piézoélectriquement actif, **en ce que** grâce à l'unité de réglage radial (1) l'extension radiale effective au niveau du membre rotatif (2) à maintenir et/ou la pression d'appui sur le membre rotatif (2) peut être modifiée au moins entre deux dimensions de façon réversible et commandée, **en ce que** l'unité de réglage axial (31) comprend un matériau piézoélectriquement actif, et **en ce que** grâce à l'unité de réglage axial (31), l'extension axiale effective au niveau du membre rotatif (2) à maintenir et/ou la pression d'appui axiale sur le membre rotatif (2) peut être modifiée entre deux dimensions de façon réversible et commandée.

6. Membre rotatif selon la revendication 5, **caractérisé en ce que** l'unité de réglage radial (1) est disposée directement sur le périmètre extérieur du membre rotatif (2).

7. Membre rotatif selon la revendication 5, **caractérisé en ce que** l'unité de réglage radial (1) est disposée sur le périmètre extérieur du palier d'arbre (3).

8. Membre rotatif selon la revendication 5, **caractérisé en ce que** l'unité de réglage radial (1) est conçue sous la forme d'une coque séparée en deux.

9. Membre rotatif selon la revendication 5, **caractérisé en ce que** le membre rotatif (2) est un membre d'un système rotatif, de préférence un vilebrequin ou un arbre à cames d'un moteur à combustion interne, en particulier d'un moteur diesel ou essence.

10. Membre rotatif selon la revendication 5, **caractérisé en ce que** le membre rotatif (2) est un membre d'un système rotatif, de préférence un arbre ou un rotateur d'un électromoteur.

11. Membre rotatif selon la revendication 5, **caractérisé en ce que** le membre rotatif (2) est un membre d'un système rotatif d'une hélice ou d'une propulsion à réaction.
